Europäisches Patentamt

European Patent Office

Office européen des brevets

(11) Veröffentlichungsnummer: **0 048 707**
**A2**

## (12) EUROPÄISCHE PATENTANMELDUNG

(21) Anmeldenummer: **81890151.4**

(22) Anmeldetag: **17.09.81**

(51) Int. Cl.³: **F 28 G 15/04**
**F 16 J 15/32, F 16 J 1/24**

(30) Priorität: **18.09.80 AT 4668/80**

(43) Veröffentlichungstag der Anmeldung:
**31.03.82 Patentblatt 82/13**

(84) Benannte Vertragsstaaten:
**BE CH DE FR GB IT LI LU NL SE**

(71) Anmelder: **Rädler, Xaver**
**Boltzmanngasse 17**
**A-1090 Wien(AT)**

(72) Erfinder: **Rädler, Xaver**
**Boltzmanngasse 17**
**A-1090 Wien(AT)**

(74) Vertreter: **Binder, Otto, Dipl.-Ing.**
**Stallburggasse 2**
**A-1010 Wien(AT)**

(54) Rohrreinigungsvorrichtung.

(57) Die insbesondere für die Reinigung der Rohre von Wärmeaustauschern geeignete Rohrreinigungsvorrichtung besitzt einen in einem Zylinder dichtend geführten, hydraulisch axial bewegbaren und auf der drehbaren Werkzeugwelle frei drehbar gelagerten Kolben (2), dessen an der Wandung des Zylinders anliegende Kolbendichtung (6) mit axialem Spiel (5) in einer sich über den Kolbenumfang erstreckenden ringförmigen Nut (3) des Kolbens (2) gelagert ist.

Zwecks Verringerung der Formänderungen der Dichtung (6) während des Betriebes und Verlängerung der Lebensdauer dieser Dichtung (6) ist diese Dichtung (6) in einer innerhalb der Nut (3) axial verschiebbaren ringförmigen Halterung gehalten, die aus zwei der Dichtung (6) beidseits seitlich zugeordneten Stützringen (4) oder aus einem die Dichtung teilweise umfassenden Käfig bestehen kann.

Die Nut (3) kann beidseits von vorzugsweise aus Kunststoff bestehenden Führungsringen (7) begrenzt sein.

EP 0 048 707 A2

- 1 -

Rohrreinigungsvorrichtung

Die Erfindung betrifft eine Rohrreinigungsvorrichtung, insbesondere für die Rohre von Wärmeaustauschern, mit einem in einem Zylinder dichtend geführten, hydrau= lisch axial bewegbaren und auf der drehbaren Werkzeug= welle frei drehbar gelagerten Kolben, dessen an der Wandung des Zylinders anliegende Kolbendichtung mit axialem Spiel in einer sich über den Kolbenumfang er= streckenden ringförmigen Nut des Kolbens gelagert ist.

Eine solche Vorrichtung ist aus der USA-Patentschrift 3 901 132 bekanntgeworden, doch besitzt der Kolben dieser vorbekannten Vorrichtung einen vergleichsweise komplizierten und aufwendigen langgestreckten Aufbau mit einer Vielzahl nebeneinandergereihter, aus Kunst= stoff bestehender Dichtungsringe, die eine konische Gestaltung aufweisen, mit gruppenweise entgegengesetz= ter Konizität auf einer Kunststoffhülle aufgereiht sind und von Halteringen gehalten werden. Die vorbekannte Vorrichtung ist nicht nur raum- und materialaufwendig, sondern besitzt überdies nur eine geringe Lebensdauer, weil die konisch gestalteten Dichtungsringe, insbeson= dere die in der Reihe innenliegenden Dichtungsringe, vom fluiden Medium nur schlecht umspült werden und in= folge der starken Verformung während des Betriebes einem hohen Verschleiß unterliegen.

- 2 -

Aufgabe der Erfindung ist es, eine Vorrichtung der eingangs bezeichneten Gattung einfacher und robuster als bisher zu gestalten und dennoch innerhalb einer langen Lebensdauer zu einer zuverlässigen Funktion zu befähigen.

Erfindungsgemäß wird diese Aufgabe dadurch gelöst, daß eine einzelne Kolbendichtung in einer innerhalb der Nut des Kolbens axial verschiebbaren ringförmigen Halterung gehalten ist.

Dank dieser erfindungsgemäßen Lösung findet man mit einem einzigen Dichtungsring das Auslangen und dieser einzige Dichtungsring erreicht infolge günstiger Pro= filierung und daraus resultierender geringer Verformung und Beanspruchung eine besonders lange Lebensdauer.

Die Länge des kompakt gestaltbaren Kolbens verringert sich auf ein optimales Minimum und es bedarf keiner aufwendigen Vorkehrungen, um die Bespülung der Kolben= dichtung mit dem hydraulischen Medium sicherzustellen; als hydraulisches Medium kann ohneweiteres gewöhnliches Wasser verwendet werden.

Die Halterung der Kolbendichtung kann im Rahmen der Erfindung bevorzugt aus zwei dieser Dichtung beidseits seitlich zugeordneten Stützringen bestehen, es ist aber auch denkbar, diese Halterung aus einem die Dichtung teilweise umfassenden Käfig auszubilden.

Eine besonders schonende Ausbildung der Kolbendichtung ergibt sich, wenn das Profil dieser Dichtung jenes der Halterung mit einem ausgerundeten Wulst überragt.

Nach einer bevorzugten Ausführungsform des Erfindungs=
gegenstandes ist die Nut beiderseits von vorzugsweise
aus Kunststoff, z.B. Acetalharz, bestehenden Führungen
begrenzt, die aus im Bereich der Nutenkanten ange=
ordneten Führungsringen bestehen können. Zweckmäßiger=
weise fluchtet das Profil dieser Führungsringe etwa
mit dem Umfang der Halterung der Kolbendichtung und
steht über den Kolbenumfang vor.

Mit diesen Führungen wird einer vorzeitigen Abnutzung
der Nutkanten bzw. der die Dichtung haltenden Halterung
vorgebeugt.

Die Verringerung der Länge des Kolbens im Sinne der
Erfindung erbringt weiters den Vorteil, daß dieser kurze
Kolben auf der Werkzeugwelle besonders einfach befestigt
werden kann.

Vorteilhafterweise ist der Kolben auf der drehbaren
Werkzeugwelle zwischen einem Bund dieser Welle und einer
auf deren freies Ende z.B. mit einem Federring, vorzugs=
weise einem Seeger-Sicherungsring, befestigten Scheibe
gelagert.

Gegen die Werkzeugwelle kann der Kolben sehr einfach
mit einem Dichtungsring, z.B. einem O-Ring, abgedichtet
werden.

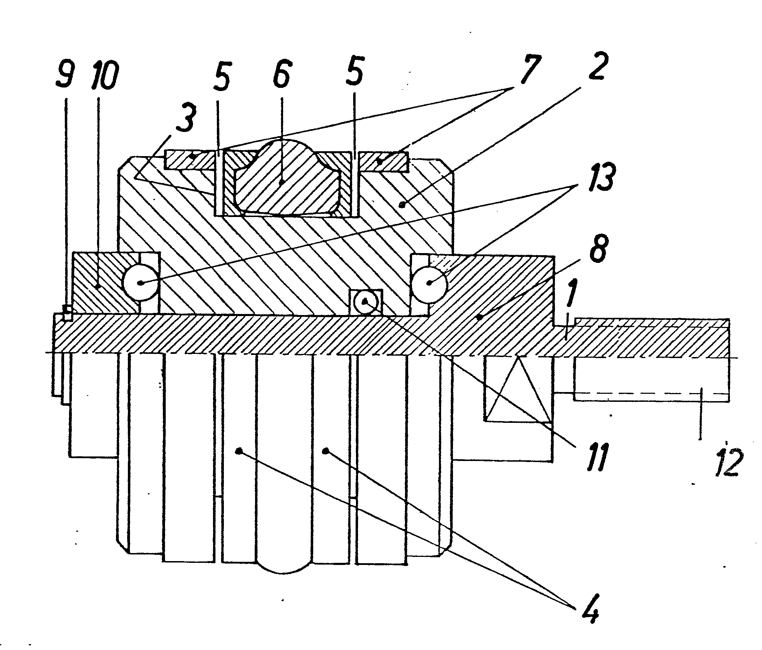

Die einzige Zeichnungsfigur zeigt ein Ausführungsbei=
spiel des Erfindungsgegenstandes in einem Axialschnitt.

Der im - nicht dargestellten - Zylinder dichtend geführte, hydraulisch axial bewegbare und auf der drehbaren, mit dem nicht dargestellten Reinigungswerkzeug verbundenen Werkzeugwelle 1 frei drehbar gelagerte Kolben 2 trägt in einer sich über den Kolbenumfang erstreckenden ringförmigen Nut 3 eine axial verschiebbare, von zwei Stützringen 4 mit axialem Spiel 5 gehaltene Kolbendichtung 6.

Die Nut 3 ist beidseits von vorzugsweise aus Kunststoff, z.B. Acetalharz, bestehenden Führungsringen 7 begrenzt, die mit ihrem Profil über den Kolbenumfang vorstehen und etwa mit dem Umfang der Halterung 4 fluchten.

Der Kolben 2 ist auf der drehbaren Werkzeugwelle 1 zwischen einem Bund 8 dieser Welle 1 und einem auf deren Ende mit einem Seeger-Sicherungsring 9 befestigten Scheibe 10 gelagert und ist gegen die Werkzeugwelle 1 mit dem O-Ring 11 abgedichtet.

An dem der Scheibe 10 gegenüberliegenden Ende ist die Werkzeugwelle 1 mit einem Gewindeteil 12 ausgestattet, um mit einem das Werkzeug tragenden Verlängerungsstück verbunden zu werden. Zwischen dem frei auf der Welle 1 drehbaren Kolben 2 und dem Bund 8 bzw. der Scheibe 10 sind Kugellager 13 angeordnet.

Patentansprüche

1. Rohrreinigungsvorrichtung, insbesondere für die Rohre von Wärmeaustauschern, mit einem in einem Zylinder dichtend geführten, hydraulisch axial bewegbaren und auf der drehbaren Werkzeugwelle (1) frei drehbar gelagerten Kolben (2), dessen an der Wandung des Zylinders anliegende Kolbendichtung (6) mit axialem Spiel in einer sich über den Kolben= umfang erstreckenden ringförmigen Nut (3) des Kolbens (2) gelagert ist, dadurch gekennzeichnet, daß die Kolbendichtung (6) in einer innerhalb der Nut (3) axial verschiebbaren ringförmigen Halterung (4) gehalten ist.

2. Vorrichtung nach Anspruch 1, dadurch gekennzeichnet, daß die Halterung der Kolbendichtung (6) aus zwei der Dichtung (6) beidseits seitlich zugeordneten Stützringen (4) besteht.

3. Vorrichtung nach Anspruch 1, dadurch gekennzeichnet, daß die Halterung der Kolbendichtung aus einem die Dichtung teilweise umfassenden Käfig besteht.

4. Vorrichtung nach einem der Ansprüche 1 bis 3, da= durch gekennzeichnet, daß das Umfangsprofil der Kolbendichtung (6) jenes der Halterung (4) mit einem ausgerundeten Wulst überragt.

5. Vorrichtung nach einem der Ansprüche 1 bis 4, da= durch gekennzeichnet, daß die Nut (3) teilweise beidseits von, vorzugsweise aus Kunststoff, z.B. Acetalharz, bestehenden Führungen (7) begrenzt ist.

6. Vorrichtung nach Anspruch 5, dadurch gekennzeichnet, daß die Führungen aus im Bereich der Nutkanten angeordneten Führungsringen (7) bestehen.

7. Vorrichtung nach Anspruch 6, dadurch gekennzeichnet, daß das Profil der Führungsringe (7) über den Umfang des Kolbens (2) vorsteht und mit dem Umfang der Stützringe (4) der Kolbendichtung (6) fluchtet.

8. Vorrichtung nach einem der Ansprüche 1 bis 7, da= durch gekennzeichnet, daß der Kolben (2) auf der drehbaren Werkzeugwelle (1) zwischen einem Bund (8) und einer auf deren freies Ende z.B. mit einem Federring, vorzugsweise einem Seeger-Sicherungsring (9), befestigten Scheibe (10) gelagert ist.

9. Vorrichtung nach Anspruch 8, dadurch gekennzeichnet, daß der Kolben (2) gegen die Werkzeugwelle (1) mit einem Dichtungsring, z.B. einem O-Ring (11), abge= dichtet ist.